# EUROPEAN PATENT SPECIFICATION

(11) **EP 1 934 488 B1**
(45) Date of publication and mention of the grant of the patent: **19.06.2013**
(21) Application number: 06802457.9
(22) Date of filing: 29.08.2006
(51) Int. Cl.: F16B 15/08, F16B 27/00

(54) **CARRIER STRIP SYSTEM AND METHOD FOR DIFFERENT DIAMETER FASTENERS**
TRÄGERSTREIFENSYSTEM UND VERFAHREN FÜR FÜR UNTERSCHIEDLICHE DURCHMESSER-BEFESTIGER
SYSTÈME DE BANDE DE SUPPORT ET PROCÉDÉ DE LOGEMENT D ATTACHES DE DIFFÉRENTS DIAMÈTRES

(30) Priority: 20.09.2005 US 230890
(43) Date of publication of application: 25.06.2008
(73) Proprietor: Powers Products III, LLC, New Rochelle NY 10801 (US)
(72) Inventor: GAUDRON, Paul, Stamford, CT 06902 (US)
(74) Representative: Cavalier, Marcus Alexander Mawson
(86) International application number: PCT/US2006/033501
(87) International publication number: WO 2007/035226

(56) References cited:
- WO-A2-2005/028160
- US-A- 4 718 551
- US-A- 5 775 514
- US-B1- 6 679 415

## Description

### BACKGROUND

Fastener setting tools have become common tools in the construction industry. Their ability to drive a fastener fully with just the pull of a trigger is significantly more efficient than methods of hammering or screwing fasteners in. Traditionally, setting tools required their fasteners be loaded one at a time into the proper position in the setting tool before they could be driven into the work piece. More recently, setting tools have included a magazine that spring loads several fasteners, for auto loading, which significantly increases the speed at which large numbers of fasteners can be driven. Such magazines are augmented with respect to function by the advent of fastener holders in the form of carrier strips.

A wide variety of fasteners are now available for use with setting tools. This variety is required to meet the particular demands of the work pieces being joined together. One common variation in fasteners is their diameter. Different diameter fasteners are employed in distinct magazines or distinct setting tools. Distinct magazines at best are required in order to ensure proper feed of the fasteners. Such arrangements require a user employing fasteners of different diameters to have multiple magazines or multiple setting tools, and further may require additional time when magazines are replaced to accommodate different diameter fasteners. This leads to inefficiency and is therefore undesirable. WO2005/028160 discloses a carrier strip system comprising carrier strips receptive of same diameter fasteners. The carrier strips are mounted in pairs on the shanks of a row of fasteners. The spacing between the pair of carrier strips is varied according to the length of the fasteners so that carrier strips are not limited to use on one length of fastener.

Document US 6679415 B1 considered to be the prior art closest to the subject-matter of claim 1 and discloses a carrier step system according to the preamble of claim 1.

### SUMMARY

The invention provides a carrier strip system comprising a plurality of discrete carrier strips respectively receptive of fasteners having a first diameter and a second diameter that is less than said first diameter, said strips having internal features configured to complementarily engage said fasteners and substantially identical external dimensions for contacting carrier strip registers provided in a single setting tool magazine such that said plurality of discrete carrier strips are receivable into said single setting tool magazine, said first diameter fasteners having a diameter for contacting a said carrier strip register and said second diameter fastener carrier strips having a portion having a diameter that matches said diameter of said first diameter fastener for contacting said carrier strip register contacted by said first diameter fastener diameter.

The invention also includes a method of enabling receipt of different diameter fasteners in a single setting tool magazine, said method comprising:
providing respective discrete carrier strips having substantially identical external dimensions for contacting carrier strip registers provided in said single setting tool magazine and distinct internal dimensions complementary to said different diameters, the carrier strips for a smaller diameter fastener having a diameter that matches a diameter of a larger diameter fastener for contacting a carrier strip register provided in said single setting tool magazine that is contacted by said diameter of said larger diameter fastener; and
loading said fasteners having said different diameters into said respective carrier strips whereby said different diameter fasteners and said respective carrier strips will engage the same carrier strip registers when loaded in a said single setting tool magazine.

### BRIEF DESCRIPTION OF THE DRAWINGS

Referring now to the drawings wherein like elements are numbered alike in the several Figures:

Figure 1 is a front elevation view of a large diameter carrier strip assembly of an embodiment of the invention;

Figure 2 is a side elevation view of the carrier strip assembly of Figure 1;

Figure 3 is a front elevation view of a small diameter carrier strip assembly of an embodiment of the invention;

Figure 4 is a side elevation view of the carrier strip assembly of Figure 3.

### DETAILED DESCRIPTION

In connection with the above-identified drawbacks of the prior art, the presently disclosed concept allows for fasteners of different diameters to be run in the same magazine of a setting tool. In order for such an application to be possible, an outside diameter of a fastener carrier strip must remain the same for different fastener diameters and yet securely hold the fastener in place. Moreover, since setting tool magazines employ a diametric surface of the fastener as an additional guiding surface, where narrower diameter fasteners are to be utilized in the same setting tool magazine accommodation must be made for the guiding function of the outside diameter of the larger diameter fasteners when using the smaller diameter fasteners.

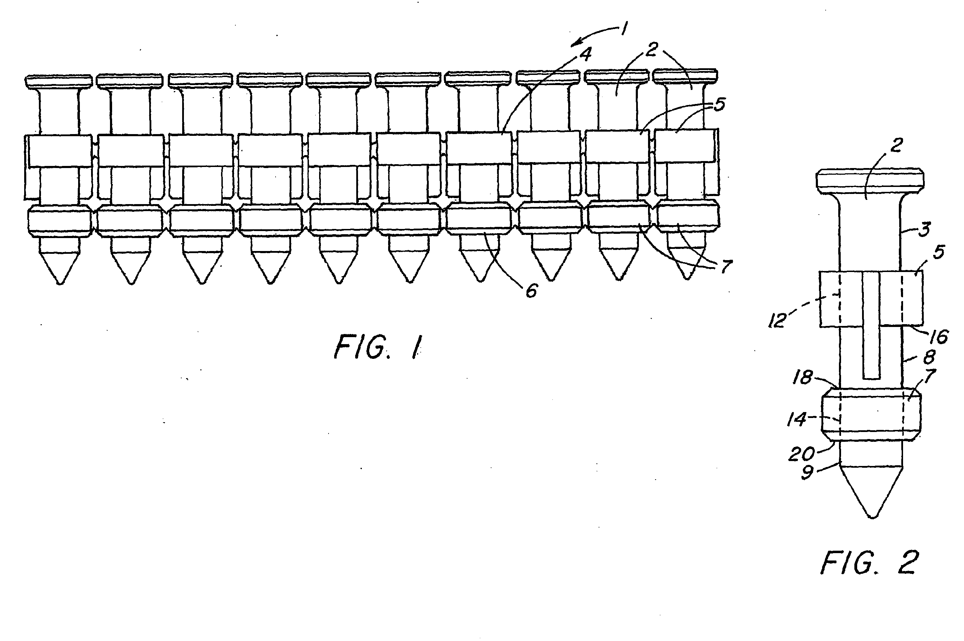

Referring to Figure 1, a large diameter carrier strip assembly 1 is illustrated comprising: large diameter fastener(s) 2, a large diameter head-end break-free strip 4 made of several head-end segments 5, and a large diameter point-end break-free strip 6 made of several point-end segments 7. The carrier strip assembly 1 is illustrated in a condition in which it may be loaded into a fastener setting tool such as a combustion driven fastening system.

Referring now to Figure 2, each head-end segment 5 has a hole 12 there through and each point-end segment 7 has a hole 14 there through. The segment 5 to segment 5 spacing in the head-end break-free strip 4 is equal to the segment 7 to segment 7 spacing of the point-end break-free strip 6, causing the hole 12 to hole 12 spacing to be the same as the hole 14 to hole 14 spacing. Holes 12 and 14 are sized to create an interference fit with the outside diameter 3 of the large diameter fastener 2. The interference fit maintains the relative position of the large diameter head-end break-free strip 4, the large diameter point-end break-free strip 6 and the large diameter fastener(s) 2 to each other.

As alluded to above there are several registers for the strip in a magazine (not shown), these are both diametrical and axial. These registers contact surfaces on the components that make up the large diameter carrier strip assembly 1 to assure the large diameter carrier strip assembly 1 will be properly guided and indexed within the magazine and setting tool (not shown). Diameters 8 and 9 are registered in the magazine to assure proper alignment of the fastener 2 prior to discharge from the fastener setting tool. Diameter 8 is immediately beyond radial end surface 16 of head-end segment 5 in the direction of the point-end of the fastener 2, and diameter 9, is immediately beyond radial end surface 20 of point-end segment 7 in the direction of the point-end of the fastener 2. Radial end surfaces 18 and 20 are also registered in the magazine to properly locate the fastener 2 in an axial direction prior to its discharge from the fastener setting tool. Radial end surface 18 is formed from the head-end of segment 7 and radial end surface 20 is formed from the point-end of segment 7. Since end surface 18 and end surface 20 are formed on the same component, segment 7, the distance between them can be accurately controlled.

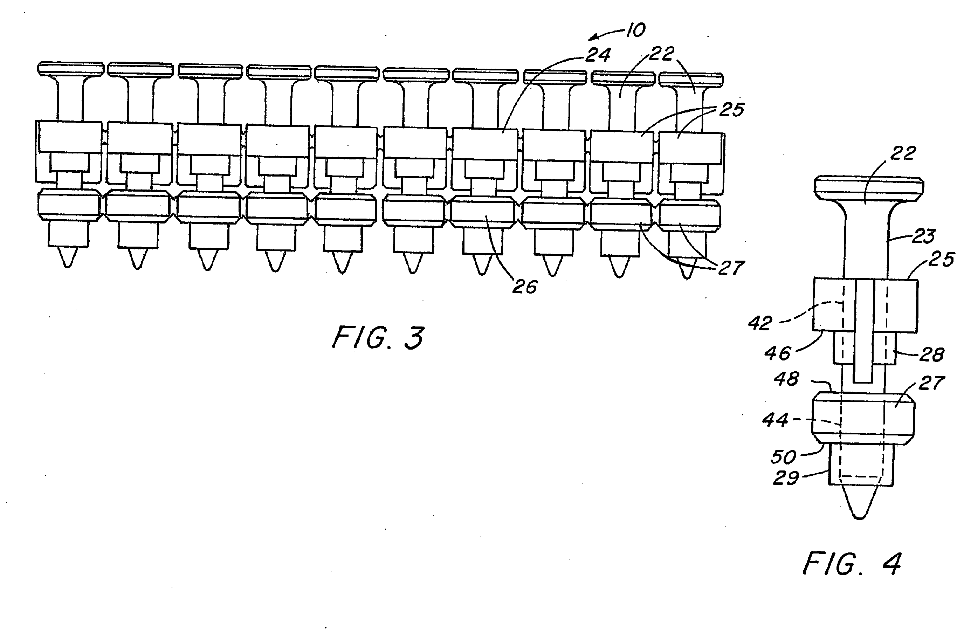

Referring to Figure 3, a small diameter carrier strip assembly 10 is illustrated comprising: small diameter fastener(s) 22, a small diameter head-end break-free strip 24 made of several head-end segments 25, and a small diameter point-end break-free strip 26 made of several point-end segments 27. The carrier strip assembly 10 is illustrated in a condition in which it may be loaded into a fastener setting tool such as a combustion driven fastening setting tool.

Referring now to Figure 4, each head-end segment 25 has a hole 42 there through and each point-end segment 27 has a hole 44 there through. The segment 25 to segment 25 spacing in the head-end break-free strip 24 is equal to the segment 27 to segment 27 spacing of the point-end break-free strip 26, causing the hole 42 to hole 42 spacing to be the same as the hole 44 to hole 44 spacing which also matches the hole 42 to hole 42 spacing of the large diameter head-end break-free strip 4. Holes 42 and 44 are sized to create an interference fit with the outside diameter 23 of the small diameter fastener 22. The interference fit maintains the relative position of the small diameter head-end break-free strip 24, the small diameter point-end break-free strip 26 and the small diameter fastener(s) 22 to each other.

As described earlier, there are several registers for guiding the large diameter carrier strip assembly 1 within the magazine of the fastener setting tool. The surfaces on the components of the small diameter carrier strip assembly 10 that interface with the registers in the magazine must therefore match those from the large diameter carrier strip assembly 1 in order for the small diameter carrier strip assembly 10 to feed properly into the magazine of the fastener setting tool.

Therefore, segments 27 that make up the small diameter point-end carrier strip 26 have surfaces to match those of the segments 7 of the large diameter point-end carrier strip 6. Specifically, the radial end surfaces 48 and the radial end surfaces 50 will register within the magazine just as the radial end surfaces 18 and radial end surfaces 20 did for the large diameter head-end segments 5. Further, the axial distance separating radial end surfaces 48 from radial end surfaces 50 of segments 27 matches the axial distance separating radial end surfaces 18 from radial end surfaces 20 of segments 7. Thereby, allowing either the large diameter fastener carrier strip 1 or the small diameter fastener carrier strip 10 to axially register within a single magazine.

Similarly, the diametrically registering surfaces match as well. Specifically, diameters 28 of segments 25 match the diameter 8 of the large diameter fastener's shank. The fact that diameters 28 are formed as part of the segments 25 whereas diameters 8 are formed as part of the fasteners 2 will not effect the registration within the magazine as long as the diameters are equal.

The other diametrically registering surfaces from the large diameter carrier strip 1 are diameters 9 of the large diameter fasteners shank 8. Therefore, diameters 29 of segments 27 match that of diameters 9 of large diameter fasteners 2.

While the invention has been described with reference to an exemplary embodiment, it will be understood by those skilled in the art that various changes may be made and equivalents may be substituted for elements thereof and , it is intended that the invention not be limited to the particular embodiment disclosed as the best mode contemplated for carrying out this invention, but that the invention will include all embodiments falling within the scope of the claims.

## Claims

1. A carrier strip system comprising a plurality of discrete carrier strips (4, 6; 24, 26) respectively receptive of fasteners (2; 22) having a first diameter and a second diameter that is less than said first diameter, said strips having internal features (12, 14; 42, 44) configured to complementarily engage said fasteners and substantially identical external dimensions (18, 20; 48, 50) for contacting carrier strip registers provided in a single setting tool magazine such that said plurality of discrete carrier strips are receivable into said single setting tool magazine, **characterised by** said first diameter fasteners (2) having a diameter (8, 9) for contacting a said carrier strip register and said second diameter fastener carrier strips (24, 26) having a portion having a diameter (28) that matches said diameter (8, 9) of said first diameter fastener (2) for contacting said carrier strip register contacted by said first diameter fastener diameter.

2. A carrier strip system as claimed in claim 1, wherein the carrier strips (4, 6; 24, 26) each comprise a head-end break-free strip (4; 24) and a point-end break-free strip (6; 26).

3. A carrier strip system as claimed in claim 2, wherein said identical external dimensions comprise dimensions defined by respective oppositely facing end surfaces (18, 20; 48, 50) of said point-end break-free strips (6; 26) that contact respective carrier strip registers of said single setting tool magazine for locating said fasteners in an axial direction thereof.

4. A method of enabling receipt of different diameter fasteners (2; 22) in a single setting tool magazine, said method **characterised by**:
providing respective discrete carrier strips (4, 6; 24, 26) having substantially identical external dimensions (18, 20; 48, 50) for contacting carrier strip registers provided in said single setting tool magazine and distinct internal dimensions (12, 14; 42, 44) complementary to said different diameters, the carrier strips (24, 26) for a smaller diameter fastener (22) having a diameter (28) that matches a diameter (8, 9) of a larger diameter fastener (2) for contacting a carrier strip register provided in said single setting tool magazine that is contacted by said diameter (8, 9) of said larger diameter fastener; and
loading said fasteners (2, 22) having said different diameters into said respective carrier strips (4, 6; 24, 26) whereby said different diameter fasteners (2, 22) and said respective carrier strips will engage the same carrier strip registers when loaded in a said single setting tool magazine.

5. A method as claimed in claim 4, comprising providing said respective carrier strips (4, 6; 24, 26) as a pair comprising a head-end break-free strip (4; 24) and a point-end break-free strip (6; 26) and providing said point-end break-free strips with oppositely facing end surfaces (18, 20; 48, 50) that define identical external dimensions of said carrier strips for contacting carrier strip registers of said single setting tool magazine for locating said fasteners in an axial direction thereof.

## Patentansprüche

1. Trägerbandsystem, umfassend eine Vielzahl an einzelnen Trägerbändern (4, 6; 24, 26), die jeweils aufnahmebereit für ein Befestigungsmittel (2; 22) sind, mit einem ersten Durchmesser und einem zweiten Durchmesser, der kleiner als der genannte erste Durchmesser ist, wobei die Bänder innere Eigenschaften (12, 14; 42, 44), die ausgestaltet sind, um die genannten Befestigungsmittel komplementär zu verbinden und im wesentlichen identische externe Abmessungen (18, 20; 48, 50) aufweisen zum Kontaktieren der Trägerstreifenregister, die in einem einzelnen Einstellungs-Werkzeugmagazin bereitgestellt sind, derart, dass die genannte Vielzahl an einzelnen Trägerstreifen in das genannte einzelne Einstellungs-Werkzeugmagazin aufnehmbar sind, **dadurch gekennzeichnet, dass** der genannte erste Durchmesser des Befestigungsmittel (2) einen Durchmesser (8, 9) zum Kontaktieren eines genannten Trägerstreifenregisters aufweist und der genannte zweite Durchmesser des Befestigungsmittels des Trägerstreifens (24, 26) einem Abschnitt mit einem Durchmesser (28) aufweist, der mit dem genannten Durchmesser (8, 9) des genannten ersten Durchmessers des Befestigungsmittels (2) übereinstimmt, zum Kontaktieren des genannten Trägerstreifenregisters, das durch den genannten ersten Durchmesser des Befestigungsmitteldurchmessers kontaktiert wird.

2. Trägerbandsystem nach Anspruch 1, wobei die Trägerstreifen (4, 6; 24, 26) jeweils einen Kopfend-bruchfreien Streifen (4; 24) und einen Spitzend-bruchfreien Streifen (6; 26) aufweisen.

3. Trägerbandsystem nach Anspruch 2, wobei die genannten identischen externen Abmessungen Abmessungen umfassen, die durch jeweils gegenüberliegende zugewandte Endoberflächen (18, 20; 48, 50) der genannten Spitzend-bruchfreien Streifen (6; 26) definiert sind, die jeweilige Trägerstreifenregister des genannten einzelnen Einstellungs-Werkzeugmagazins zum Festlegen der genannten Befestigungsmittel in einer axialen Richtung davon kontaktieren.

4. Verfahren zum Ermöglichen der Aufnahme von Befestigungsmittel mit verschiedenem Durchmesser (2; 22) in einem einzelnen Einstellungs-Werkzeugmagazin, wobei das Verfahren **gekennzeichnet ist durch**:
Bereitstellen jeweiliger einzelner Trägerbänder (4, 6; 24, 26) mit im wesentlichen identischen externen Abmessungen (18, 20; 48, 50) zum Kontaktieren der Trägerstreifenregister, die in dem genannten einzelnen Einstellungs-Werkzeugmagazin bereitgestellt sind und einzelnen inneren Abmessungen (12, 14; 42, 44), die zu den genannten verschiedenen Durchmessern komplementär sind, wobei die Trägerstreifen (24, 26) für einen kleineren Durchmesser des Befestigungsmittels (22) einen Durchmesser (28) aufweisen, der dem Durchmesser (8,9) eines größeren Durchmessers des Befestigungsmittels (2) entspricht, zum Kontaktieren eines Trägerstreifenregisters, das in dem genannten einzelnen Einstellungs-Werkzeugmagazin bereitgestellt wird, dass **durch** den genannten Durchmesser (8, 9) des genannten größeren Durchmessers des Befestigungsmittels kontaktiert wird; und
Beladen der genannten Befestigungsmittel (2, 22) mit den genannten verschiedenen Durchmessern in die genannten jeweilige Trägerstreifen (4, 6; 24, 26), wodurch die genannten verschiedenen Durchmesser des Befestigungsmittels (2, 22) und die genannten jeweiligen Trägerstreifen die gleichen Trägerstreifenregister verbinden werden, wenn sie in ein genanntes einzelnes Einstellungs-Werkzeugmagazin geladen werden.

5. Verfahren nach Anspruch 4, umfassend Bereitstellen der genannten jeweiligen Trägerstreifen (4, 6; 24, 26) als ein Paar, umfassend einen Kopfend-bruchfreien Streifen (4; 24) und einen Spitzend-bruchfreien Streifen (6; 26) und Bereitstellen der genannten Spitzend-bruchfreien Streifen mit gegenüberliegenden zugewandten Endoberflächen (18, 20; 48, 50), die identische externe Abmessungen der genannten Trägerstreifen zum Kontaktieren der Trägerstreifenregister des genannten einzelnen Einstellungs-Werkzeugmagazins zum Festlegen der genannten Befestigungsmittel in einer axialen Richtung davon definieren.

## Revendications

1. Système de bande de support comprenant une pluralité de bandes de support discrètes (4, 6 ; 24, 26) respectivement réceptrices d'attaches (2 ; 22) ayant un premier diamètre et un second diamètre qui est inférieur audit premier diamètre, lesdites bandes ayant des caractéristiques internes (12, 14 ; 42, 44) configurées pour s'engager de manière complémentaire sur lesdites attaches et des dimensions externes sensiblement identiques (18, 20 ; 48, 50) pour venir en contact avec des registres de bandes de support ménagés dans un magasin d'outil de montage unique de sorte que ladite pluralité de bandes de support discrètes puissent être reçues dans ledit magasin d'outil de montage unique, **caractérisé en ce que** les attaches de premier diamètre (2) ont un diamètre (8, 9) pour venir en contact avec un dit registre de bande de support et **en ce que** les bandes de support d'attaches de second diamètre (24, 26) ont une portion d'un diamètre (28) qui correspond audit diamètre (8, 9) de ladite attache de premier diamètre (2) pour venir en contact avec ledit registre de bande de support en contact avec ladite attache de premier diamètre.

2. Système de bande de support selon la revendication 1, dans lequel les bandes de support (4, 6 ; 24, 26) comprennent chacune une bande d'extrémité de tête ininterrompue (4 ; 24) et une bande d'extrémité de pointe ininterrompue (6 ; 26).

3. Système de bande de support selon la revendication 2, dans lequel lesdites dimensions externes identiques comprennent des dimensions définies par des surfaces d'extrémité respectives tournées en sens opposé (18, 20 ; 48, 50) desdites bandes d'extrémités de pointe ininterrompues (6 ; 26) qui viennent en contact avec des registres respectifs de bandes de support dudit magasin d'outil de montage unique pour localiser lesdites attaches dans leur direction axiale.

4. Procédé permettant de recevoir des attaches de différents diamètres (2 ; 22) dans un magasin d'outil de montage unique, ledit procédé étant **caractérisé en ce qu'**il consiste à :
fournir des bandes de support discrètes respectives (4, 6 ; 24, 26) ayant des dimensions externes sensiblement identiques (18, 20 ; 48, 50) pour venir en contact avec des registres de bandes de support ménagés dans ledit magasin d'outil de montage unique et des dimensions internes distinctes (12, 14 ; 42, 44) complémentaires desdits diamètres différents, les bandes de support (24, 26) pour une attache de plus petit diamètre (22) ayant un diamètre (28) qui correspond à un diamètre (8, 9) d'une attache de plus grand diamètre (2) pour venir en contact avec un registre de bande de support ménagé dans ledit magasin d'outil de montage unique qui est en contact avec ledit diamètre (8, 9) de ladite attache de plus grand diamètre ; et
charger lesdites attaches (2, 22) ayant lesdits diamètres différents dans lesdites bandes de support respectives (4, 6 ; 24, 26) de sorte que lesdites attaches de diamètres différents (2, 22) et lesdites bandes de support respectives s'engagent sur les mêmes registres de bandes de support lorsqu'ils sont chargés dans un dit magasin d'outil de montage unique.

5. Procédé selon la revendication 4, comprenant la mise en oeuvre desdites bandes de support respectives (4, 6 ; 24, 26) sous la forme d'une paire comprenant une bande d'extrémité de tête ininterrompue (4 ; 24) et une bande d'extrémité de pointe ininterrompue (6 ; 26) et dotant lesdites bandes d'extrémités de pointe ininterrompues de surfaces d'extrémité mutuellement opposées (18, 20 ; 48, 50) qui définissent des dimensions externes identiques desdites bandes de support pour venir en contact avec des registres de bandes de support dudit magasin d'outil de montage unique pour localiser lesdites attaches dans leur direction axiale.
